# EUROPÄISCHE PATENTSCHRIFT

(11) **EP 3 181 985 B1**
(45) Veröffentlichungstag und Bekanntmachung des Hinweises auf die Patenterteilung: **25.09.2019**
(21) Anmeldenummer: 16002504.5
(22) Anmeldetag: 24.11.2016
(51) Int. Cl.: F17C 7/00, F17C 13/02

(54) **KONSTANTDRUCKSPEICHEREINHEIT**
CONSTANT PRESSURE STORAGE UNIT
UNITÉ DE STOCKAGE DE PRESSION CONSTANTE

(30) Priorität: 15.12.2015 DE 102015016331
(43) Veröffentlichungstag der Anmeldung: 21.06.2017
(73) Patentinhaber: Linde Aktiengesellschaft, 80331 München (DE)
(72) Erfinder: Adler, Robert, 2201 Gerasdorf (AT); Rasch, Markus, 2392 Sulz im Wienerwald (AT); Gruber, Sarah, 2380 Perchtoldsdorf (AT); Hell, Johannes, A-3200 Ober-Grafendorf (AT)

(56) Entgegenhaltungen:
- EP-A2- 2 466 188
- WO-A1-2014/111649
- DE-A1-102013 211 485
- US-A- 5 169 295
- US-A- 5 454 408

## Beschreibung

Die Erfindung betrifft eine Konstantdruckspeichereinheit umfassend mindestens einen Konstantdruckspeicher, welcher durch einen verschiebbaren Trennkolben in zwei Bereiche getrennt ist, mindestens eine Flüssigkeitspumpe zur Förderung einer Flüssigkeit und mindestens einen Flüssigkeitsspeicher sowie ein Verfahren zum Betrieb einer derartigen Konstantdruckspeichereinheit.

Als Konstantdruckspeichereinheit wird eine Vorrichtung verstanden, die insbesondere zum Befüllen von kleineren, mobilen oder stationären Speichertanks genutzt werden kann. Die Konstantdruckspeichereinheit selbst kann stationär aufgebaut sein, und insbesondere als Teil einer Tankstelle oder mobil als Teil auf einem Tankfahrzeug installiert sein. Eine Konstantdruckspeichereinheit umfasst im Allgemeinen einen oder mehrere Konstantdruckspeicher, eine Flüssigkeitsversorgung, also mindestens eine Flüssigkeitspumpe und mindestens einen Speicherbehälter für die Flüssigkeit, und gegebenenfalls eine Gaskonditioniereinheit zur Anpassung des Gases an die Anforderungen des Verbrauchers. Es versteht sich, dass außerdem unterschiedliche Ventile, Regler und Sensoren zum Betrieb der Anlage vorhanden sind.

Bei der Verwendung von Konstantdruckspeichern kann auf Verdichter oder Kompressoren zwischen dem Konstantdruckspeicher und dem Verbraucher verzichtet werden. Investitions- und Wartungskosten können so gesenkt werden.

Herkömmliche Druckspeichereinrichtungen durchlaufen beim Entleeren und Befüllen viele Lastwechsel. Gerade bei der Speicherung von gasförmigem Treibstoff, insbesondere von Wasserstoff, werden die Speicherkapazitäten vor allem dadurch erhöht, dass größere Speicherdrücke verwendet werden. Dies erhöht die Belastung durch Lastwechsel zusätzlich. Aufgrund der stärkeren Nachfrage nach Wasserstoff und der Inbetriebnahme von Wasserstofftankstellen steigt die Nachfrage nach stabilen, langlebigen und wartungsarmen Speichersystemen, die schnell befüllt und entleert werden können. Herkömmliche Materialien und Vorrichtungen sind jedoch kostenintensiv oder nicht stabil genug. Wie bereits in WO2015051894 dargestellt bieten Konstantdruckspeichereinheiten eine Alternative, da die Anzahl an Lastwechsel deutlich reduziert wird. Konstantdruckspeicher werden auch in WO 2014111649 A1 beschrieben. Die Lebensdauer von Tankstellen kann dadurch deutlich verlängert werden. Aus dem Stand der Technik sind vor allem Konstantdruckspeichereinheiten für komprimiertes Erdgas bekannt, welche für einen Speicherdruck bis max. 300 bar ausgelegt sind. Ein Beispiel einer Anwendung von Konstantdruckspeichern für Erdgastankstellen wird in US5454408 beschrieben.

Konstantdruckspeicher sind dazu vorgesehen Verbrauchern ein Gas mit einem bestimmten, konstanten Druck zur Verfügung zu stellen und zählen so zur Gruppe der Gasdruckspeicher. In der Regel ist der Druck in einem Gasspeicher abhängig von dessen Füllstand und der Druck muss beispielsweise über Verdichter bei der Abgabe an den Verbraucher angepasst werden.

Die Konstantdruckspeicher können durch mobile Einrichtungen, wie zum Beispiel durch entsprechende Tankfahrzeuge oder auch stationär, beispielsweise durch Druckerhöhungsanlagen, in einer Einspeicherphase befüllt werden. Ein Konstantdruckspeicher umfasst im Allgemeinen einen Zylinder, welcher durch einen beweglichen Trennkolben in zwei Bereiche aufgeteilt ist. Ein erster Bereich ist zur Aufnahme eines Gases ausgebildet und ein zweiter Bereich zur Aufnahme einer Flüssigkeit.

Das Prinzip eines Konstantdruckspeichers beruht darauf, dass während einer Einspeicherphase der Druck des Gases im ersten Bereich durch Vergrößerung des Volumens im ersten Bereich konstant gehalten wird, dadurch, dass sich der Trennkolben verschiebt und das Volumen des zweiten Bereiches kleiner wird. Während der Ausspeicherphase wird das Volumen des ersten Bereiches verkleinert in dem mehr Flüssigkeit in den zweiten Bereich gefördert wird und so das Volumen des zweiten Bereiches vergrößert wird, so dass wiederum der Druck im ersten Bereich konstant gehalten wird. Die Ausspeicherphase ist auch als Entleerung der Konstantdruckspeicher bezüglich des Gases zu verstehen.

Wird jedoch ein Konstantdruckspeicher während der Ausspeicherphase vollständig entleert, wandert der Kolben bis in die Endlage. Das heißt der erste Bereich für das Gas ist minimal oder nicht mehr vorhanden und der zweite Bereich für die Flüssigkeit hat sein maximales Aufnahmevolumen erreicht. An diesem Punkt muss die Flüssigkeitspumpe abschalten, da sonst der Druck im Konstantdruckspeicher Werte oberhalb eines maximalen Auslegungsdruck erreicht. Ein Problem liegt darin, dass der Druckanstieg sehr schnell erfolgt. Entsprechend notwendige Reaktionszeiten zum Stoppen der Flüssigkeitspumpe sind deshalb sehr kurz. Ein hoher Druckanstieg hat zudem unnötige Energieverlust, Schäden an der Pumpe oder sogar einen Austritt von Flüssigkeit über ein Überdruckventil zur Folge. Das Problem stellt sich nicht nur bei einem Konstantdruckspeicher, sondern auch bei Konstantdruckspeichereinheiten mit mehreren Konstantdruckspeichern, da immer ein Speicher als letztes seine Endlage erreichen wird und so einen Druckanstieg verursacht.

Aufgabe der vorliegenden Erfindung ist es deshalb ein Verfahren und eine entsprechende Vorrichtung anzugeben bei dem die Flüssigkeitspumpe rechtzeitig gestoppt werden kann um einen unzulässigen Druckanstieg zu vermeiden.

Die Aufgabe wird dadurch gelöst, dass die Konstantdruckspeicher auf der Seite auf der der Bereich ist, der für eine Flüssigkeit vorgesehen ist, mit mindestens einem Sicherheitsbehälter, in Verbindung stehen oder steht, welcher durch einen beweglichen Trennkolben in zwei Bereiche geteilt ist, wovon der eine Bereiche mit dem mindestens einem Konstantdruckspeicher und der Flüssigkeitspumpe in Verbindung steht und der andere Bereich ein Pufferfluid enthält. Und dass ein Drucksensor mit diesem Bereich des Sicherheitsbehälters und der Flüssigkeitspumpe so in Verbindung steht, dass eine Kompression des Pufferfluids durch den Drucksensor detektiert wird und die Flüssigkeitspumpe gestoppt wird
Dadurch werden Druckspitzen auf Seite der Flüssigkeit vermieden.,
Die Konstantdruckspeichereinheit wird also um einen Sicherheitsbehälter oder anders bezeichnet einem Druckausgleichsbehälter ergänzt. Dieser Sicherheitsbehälter ist jedoch so konstruiert, dass er den Konstantdruckspeichern ähnelt, so dass im Wesentlichen die gleichen Komponenten verwendet werden können. Es ist kein zusätzlicher Konstruktionsaufwand notwendig. Als Pufferfluid wird bevorzugt ein Gas, insbesondere Stickstoff verwendet. Denkbar ist auch die Verwendung von kompressiblen Flüssigkeiten als Pufferfluid. So ist beispielsweise Hydrauliköl geringfügig, insbesondere bis zu 4% kompressibel. Das Pufferfluid wird in der Regel einmalig in den Sicherheitsbehälter eingefüllt, kann jedoch bei Bedarf nachgefüllt werden. Zudem kann der Druck angepasst werden. Der Druck des Pufferfluides beträgt mindestens 2/3 des maximalen Auslegungsdruckes. Bevorzugt beträgt das Volumenverhältnis zwischen Fluid und Pufferfluid im Sicherheitsbehälter zwischen 1:1 und 3:1, insbesondere 2:1 Als Messvorrichtung wird ein Drucksensor verwendet. Diese Messvorrichtung ist so an dem Sicherheitsbehälter angebracht, dass ein Anstieg des Druckes des Pufferfluides gemessen werden kann. Wird ein Druckanstieg im Pufferfluid detektiert kann die Flüssigkeitszufuhr in die Konstantdruckspeicher unterbunden werden, in dem die Flüssigkeitspumpe gestoppt wird. Bevorzugt ist die Messvorrichtung, insbesondere über eine Steuereinheit, mit der Flüssigkeitspumpe verbunden, so dass diese automatisch gestoppt werden kann.

Aus dem Stand der Technik bekannte Druckausgleichsbehälter sind meistens nur dafür ausgerichtet kurzzeitige Druckspitzen abzufedern. Sie enthalten keine Regeleinrichtung. Zudem sind sie für niedrigere Druckbereiche ausgelegt.

Die Konstantdruckspeichereinheit ist vorteilhafterweise so ausgelegt, dass als Gas Wasserstoff gespeichert werden kann. Die Konstantdruckspeichereinheit ist bevorzugt so ausgelegt, dass ein Druck von 235 bis 5000 bar, insbesondere von 301 bis 1200 bar und bevorzugt von 620, 850, 900 oder 1000 bar gehalten werden kann.

Der maximale Betriebsdruck darf maximal um 0 bis 20 %, bevorzugt um 0,1 bis 10 % und insbesondere um 1 bis 5 % überschritten werden, bevor die Flüssigkeitszufuhr gestoppt werden muss.

Als Flüssigkeit, welche zur Aufrechterhaltung des Drucks in der Konstantdruckspeichereinheit verwendet wird, können bevorzugt schwer entflammbare Hydraulikflüssigkeiten, welche Wasser und Polyglykol enthalten (z.B. HFC) oder mineralölbasierte Hydraulikflüssigkeiten (z.B. HLP) verwendet werden. Es ist bevorzugt wenn die Hydraulikflüssigkeiten Zusatzstoffe zur Vermeidung von Korrosionsschäden, Zusatzstoffe zur Verringerung der Alterung der Flüssigkeit und/oder zur Verringerung des Verschleißes enthalten. Es wäre jedoch möglich auch andere nahezu oder allgemein inkompressible Flüssigkeiten, wie beispielsweise Wasser mit oder ohne Zusätzen, zu verwenden.

Der Flüssigkeitsspeicher umfasst ein Sicherheitsventil, welches als Berstscheibe, Überströmventil, hydraulisches Sicherheitsventil, oder anderen dem Fachmann bekannten Druckentlastungseinrichtungen ausgestaltet sein kann, welche auf den maximalen Auslegungsdruck eingestellt sind.

Derartige Sicherheitsbehälter können auch in den Konstantdruckspeichern oder in dem Sicherheitsbehälter installiert sein. Die Flüssigkeit wird im Flüssigkeitsspeicher bei Temperaturen von -45 bis +80 °C, insbesondere bei -40 bis +60 °C, und bei einem Druck von 0 bis 300 bar gelagert.

Eine Konstantdruckspeichereinheit kann einen oder mehrere Konstantdruckspeicher aufweisen. Üblich sind zwei, drei oder vier. In einer bevorzugten erfindungsgemäßen Ausgestaltung teilen sich alle Konstantdruckspeicher einen Flüssigkeitsspeicher für die Flüssigkeit, es versteht sich jedoch, dass auch mehrere Flüssigkeitsspeicher, die dementsprechend kleiner ausgeführt sind jedoch im Wesentlichen die gleichen weiteren Bestandteile enthalten, vorhanden sein können.

Die Vorteile der Erfindung und Ihrer dargestellten Ausgestaltungen liegen darin, dass Druckspitzen die entstehen, wenn alle Trennkolben der Konstantdruckspeicher in Ihrer Endlage sind, also der Konstantdruckspeicher komplett entleert ist, bezüglich des Gases, abgefedert werden, dadurch dass das Pufferfluid komprimiert wird. Durch die Komprimierung des Pufferfluides tritt keine sofortige Druckerhöhung auf.

Je nach verwendetem Messverfahren wird über eine elektrische Verbindung ein Signal an die Flüssigkeitspumpe abgegeben um die Flüssigkeitszufuhr zu stoppen oder zu starten. Die elektrische Verbindung kann hierbei direkt oder indirekt erfolgen. Sie kann über ein Kabel oder Kabellos hergestellt werden.

Es ist ausreichend Reaktionszeit, von größer 1 Sekunde vorhanden um die Druckerhöhung zu detektieren und das Signal an die Flüssigkeitspumpe weiter zu geben. Die Druckänderung des Pufferfluides wird detektiert und anschließend wird die Flüssigkeitspumpe gestoppt. Die Pumpe, die Konstantdruckspeicher und die gesamte Konstantdruckspeichereinheit kann so sicherer betrieben werden.

Im Folgenden ist ein Ausführungsbeispiel der Erfindung anhand einer Figur schematisch dargestellt. Zur besseren Übersicht wurden Ventile, Sicherheitseinrichtungen, Regelungs- und Sensoreinheiten, welcher der Fachmann zum Betrieb der Vorrichtung üblicherweise vorsehen würde, nicht eingezeichnet.

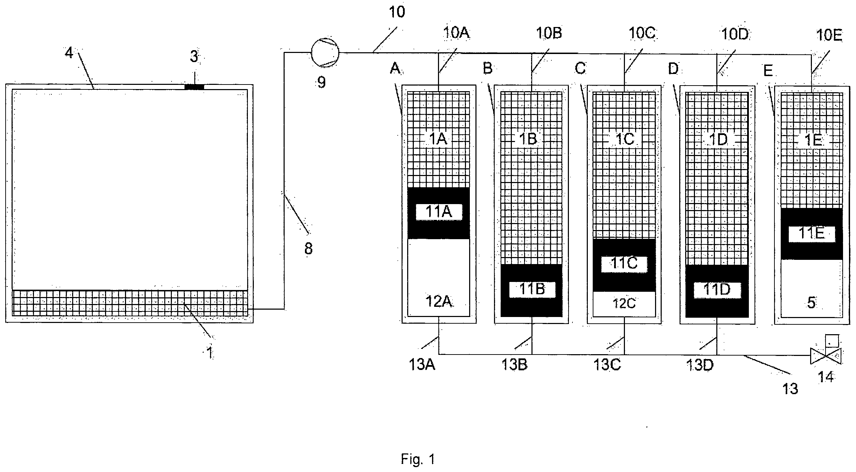

- Figur 1: zeigt schematisch den Aufbau einer Konstantdruckspeichereinheit.

Figur 1 zeigt eine mögliche Ausführungsvariante einer Konstantdruckspeichereinheit. Diese umfasst einen Flüssigkeitsspeicher 4 in welchem eine Flüssigkeit 1, in diesem Fall eine Hydraulikflüssigkeit der Kategorie HFC, zum Beispiel Hydrotherm 46M, Wasserglykol oder Hydrauliköl (HLP32 oder 46), gespeichert ist. Der Flüssigkeitsspeicher 4 umfasst zudem ein Sicherheitsventil 3. Eine Flüssigkeitspumpe 9 steht über die Transportleitung 8 mit dem Flüssigkeitsspeicher 4 zum Fördern der Flüssigkeit 1 in Verbindung. Die Flüssigkeit 1 wird im Flüssigkeitsspeicher 4 bei Umgebungstemperatur und Umgebungsdruck gelagert. Die Flüssigkeit 1 wird über die Flüssigkeitspumpe 9 und die Transportleitung 10 (bzw. 10A, 10B, 10C, 10D) in die Konstantdruckspeicher A bis D gefördert um dort die Trennkolben 11 (A bis D) zu bewegen und so den Druck des Gases, in diesem Fall von Wasserstoff 12 (12 A bis 12 D) konstant zu halten.

Im hier dargestellten Ausführungsbeispiel werden vier Konstantdruckspeicher verwendet. In der bevorzugten erfindungsgemäßen Ausgestaltung teilen sich alle Konstantdruckspeicher einen Flüssigkeitsspeicher 4 für die Flüssigkeit 1. Das Gas, also insbesondere der Wasserstoff 12, wird über die Transportleitung 13 (bzw. 13A, 13B, 13C, 13D) und das Absperrventil 14 in die Konstantdruckspeicher ein- und ausgespeichert. Der Druck des Wasserstoffs 12 beträgt zwischen 301 und 1200 bar. Die Konstantdruckspeichereinheit enthält zudem den Sicherheitsbehälter E. Dieser ist ähnlich der Konstantdruckspeicher A bis D aufgebaut. Er ist durch einen Trennkolben 11E in zwei Bereiche unterteilt, wovon ein Bereich die Flüssigkeit 1 bzw. 1 E enthält und mit den Konstantdruckspeichern A bis D sowie mit der Flüssigkeitspumpe 9 über die Transportleitungen 10 und 10E in Verbindung steht. Der andere Bereich enthält ein Pufferfluid 5, welches in diesem Fall Stickstoff ist. Der Sicherheitsbehälter wurde bereits ab Werk mit dem Pufferfluid befüllt. Das Pufferfluid kann jedoch über eine Öffnung abgelassen oder nachgefüllt werden. Auch der Ausgangsdruck des Pufferfluides kann so eingestellt werden.

Während der Einspeicherphase werden die Konstantdruckspeicher A bis D mit dem Gas, also hier mit Wasserstoff 12 über die Transportleitungen 13 beladen. Die Trennkolben 11 A, 11B, 11C, 11D werden dabei so verschoben, dass der Bereich für die Flüssigkeit 1 minimal und der Bereich für den Wasserstoff 12 maximal ist. Die Flüssigkeit 1, wird im Flüssigkeitsspeicher 4 gelagert.

Im Sicherheitsbehälter E verbleibt der Trennkolben 11E in einer mittleren Lage, so dass ein gewisser Anteil an Flüssigkeit 1E im Trennkolben ist und das Pufferfluid 5 ein gewisses Volumen des Sicherheitsbehälters einnimmt. Das Verhältnis zwischen Volumen des Fluides und des Pufferfluides ist so eingestellt, dass es bei dem Druck, für den die Konstantdruckspeichereinheit ausgelegt ist, in Ausgangsstellung ist. Insbesondere beträgt das Volumenverhältnis zwischen Fluid und Pufferfluid zwischen 1:1 und 3:1, insbesondere 2:1

In der Ausspeicherphase, wird Wasserstoff aus der Konstantdruckspeichereinheit abgegeben. Dabei wird Flüssigkeit 1 aus dem Flüssigkeitsspeicher 4 über die Flüssigleitung 8, die Flüssigkeitspumpe 9 und die Transportleitungen 10 (bzw. 10A, 10B, 10C, 10D) in die Konstantdruckspeicher A, B, C und/oder D geleitet. Die Trennkolben 11A, 11B, 11C und/oder 11D werden dabei verschoben und der Bereich für die Flüssigkeit 1 maximal und der Bereich für den Wasserstoff 12 minimal. Wenn die Trennkolben 11 A, 11B, 11C und 11D innerhalb der Konstantdruckspeicher A, B, C, D ihre Endlage erreicht haben sind die Konstantdruckspeicher bis zu einem maximalen Wert mit Flüssigkeit 1 (1A, 1B, 1C, 1D) gefüllt und das Gas ist vollständig oder nahezu vollständig ausgespeichert. Die Flüssigkeitspumpe 9 fördert nun aber weiter Flüssigkeit 1 in die Konstantdruckspeicher, so dass der Trennkolben 11E im Sicherheitsbehälter E bewegt wird und das Pufferfluid 5 komprimiert wird. Der Druckanstieg im Pufferfluid 5 wird über einen Drucksensor detektiert, wodurch die Flüssigkeitszufuhr abgebrochen wird, indem die Flüssigkeitspumpe 9 gestoppt wird. Der Druckanstieg vollzieht sich durch die Komprimierung des Pufferfluides langsamer, als dies der Fall wäre, wenn die Trennkolben 11A bis 11D ihre Endlage erreichen, ohne Pufferung. So bleibt Zeit die Flüssigkeitspumpe 9 zu stoppen, wodurch unzulässige Druckanstiege oberhalb des Auslegungsdrucks der Konstantdruckspeichereinheit vermieden werden können. Schäden an der Pumpe, den Konstantdruckspeichern, der Verlust von Flüssigkeit über Druckentlastungsventile oder andere Schäden werden dadurch vermieden.

### Liste der Bezugszeichen:

- 1: Flüssigkeit im Flüssigkeitsspeicher
- 1A, 1B, 1C, 1D: Flüssigkeit im Konstantdruckspeicher
- 1E: Flüssigkeit im Sicherheitsbehälter
- 3: Sicherheitsventil
- 4: Flüssigkeitsspeicher
- 5: Pufferfluid
- 8: Transportleitung für Flüssigkeit
- 9: Flüssigkeitspumpe
- 10, 10A, 10B, 10C, 10D, 10E: Transportleitung
- 11A, 11B, 11C, 11D, 11E: Trennkolben im Konstantdruckspeicher
- 12A, 12C: Gas im Konstantdruckspeicher
- 13, 13A, 13B, 13C, 13D: Transportleitung für Gas
- 14: Absperrventil
- A, B, C, D: Konstantdruckspeicher
- E: Sicherheitsbehälter

## Patentansprüche

1. Konstantdruckspeichereinheit umfassend mindestens einen Konstantdruckspeicher (A, B, C, D), welcher durch einen verschiebbaren Trennkolben (11A, 11B, 11C, 11D) in zwei Bereiche getrennt ist, mindestens eine Flüssigkeitspumpe (9) zur Förderung einer Flüssigkeit (1) und mindestens einen Flüssigkeitsspeicher (4), **dadurch gekennzeichnet, dass** die oder der Konstantdruckspeicher (A, B, C, D) auf der Seite auf der der Bereich ist, der für eine Flüssigkeit vorgesehen ist, mit mindestens einem Sicherheitsbehälter (E) in Verbindung stehen oder steht, welcher durch einen beweglichen Trennkolben (11E) in zwei Bereiche geteilt ist, wovon der eine Bereiche mit dem mindestens einem Konstantdruckspeicher (A, B, C, D) und der Flüssigkeitspumpe (9) in Verbindung steht und der andere Bereich ein Pufferfluid (5) enthält und dass ein Drucksensor mit diesem Bereich des Sicherheitsbehälters (E) und der Flüssigkeitspumpe (9) so in Verbindung steht, dass eine Kompression des Pufferfluides (5) durch den Drucksensor detektiert wird und die Flüssigkeitspumpe (9) gestoppt wird.

2. Verfahren zum Betrieb einer Konstantdruckspeichereinheit, welche mindestens einen Konstantdruckspeicher (A, B, C, D), welcher durch einen verschiebbaren Trennkolben (11A, 11B, 11C, 11D) in zwei Bereiche getrennt ist, mindestens eine Flüssigkeitspumpe (9) zur Förderung einer Flüssigkeit (1) und mindestens einen Flüssigkeitsspeicher (4) umfasst, **dadurch gekennzeichnet, dass** die Konstantdruckspeichereinheit zudem einen Sicherheitsbehälter (E) umfasst, welcher durch einen verschiebbaren Trennkolben (11E) in zwei Bereiche getrennt ist, und Druckspitzen auf Seite der Flüssigkeit (1E) dadurch vermieden werden, dass ein Pufferfluid (5) im anderen Bereich des Sicherheitsbehälters (E) komprimiert wird und diese Kompression, durch einen Drucksensor detektiert wird und die Flüssigkeitspumpe (9) gestoppt wird.

3. Verfahren nach Anspruch 2, **dadurch gekennzeichnet, dass** als Pufferfluid (5) ein Gas, insbesondere Stickstoff verwendet wird.

4. Verfahren nach Anspruch 2 oder 3, **dadurch gekennzeichnet, dass** die Konstantdruckspeichereinheit zur Speicherung von Wasserstoff verwendet wird.

5. Verfahren nach einem der Ansprüche 2 bis 4, **dadurch gekennzeichnet, dass** die Konstantdruckspeichereinheit schwer entflammbare Hydraulikflüssigkeiten, welche Wasser und Polyglykol enthalten oder mineralölbasierte Hydraulikflüssigkeiten als Flüssigkeit verwendet.

6. Verfahren nach Anspruch 4, **dadurch gekennzeichnet, dass** der Wasserstoff bei einem Druck von 235 bis 5000 bar, insbesondere von 301 bis 1200 bar und bevorzugt von 620, 850, 900 oder 1000 bar gespeichert wird.

## Claims

1. Constant pressure storage unit comprising at least one constant pressure store (A, B, C, D), which is separated by a displaceable separating piston (11A, 11B, 11C, 11D) into two regions, at least one liquid pump (9) for delivering a liquid (1) and at least one liquid store (4), **characterized in that**, on the side on which the region intended for a liquid is provided, the constant pressure stores or store (A, B, C, D) are or is in connection with at least one safety vessel (E), which is divided by a movable separating piston (11E) into two regions, of which one region is in connection with the at least one constant pressure store (A, B, C, D) and the liquid pump (9) and the other region contains a buffer fluid (5) and **in that** a pressure sensor is in connection with this region of the safety vessel (E) and the liquid pump (9) in such a way that a compression of the buffer fluid (5) is detected by the pressure sensor and the liquid pump (9) is stopped.

2. Method for operating a constant pressure storage unit, which comprises at least one constant pressure store (A, B, C, D), which is separated by a displaceable separating piston (11A, 11B, 11C, 11D) into two regions, at least one liquid pump (9) for delivering a liquid (1) and at least one liquid store (4), **characterized in that** the constant pressure storage unit also comprises a safety vessel (E), which is separated by a displaceable separating piston (11E) into two regions, and pressure peaks on the liquid (1E) side are avoided by a buffer fluid (5) in the other region of the safety vessel (E) being compressed and this compression being detected by a pressure sensor and the liquid pump (9) being stopped.

3. Method according to Claim 2, **characterized in that** a gas, in particular nitrogen, is used as the buffer fluid (5).

4. Method according to Claim 2 or 3, **characterized in that** the constant pressure storage unit is used for storing hydrogen.

5. Method according to one of Claims 2 to 4, **characterized in that** the constant pressure storage unit uses as the liquid low-flammability hydraulic fluids, which contain water and polyglycol, or mineral-oil-based hydraulic fluids.

6. Method according to Claim 4, **characterized in that** the hydrogen is stored at a pressure of 235 to 5000 bar, in particular of 301 to 1200 bar and preferably of 620, 850, 900 or 1000 bar.

## Revendications

1. Unité de réservoirs à pression constante comprenant au moins un réservoir à pression constante (A, B, C, D) qui est divisé en deux zones par un piston de séparation coulissant (11A, 11B, 11C, 11D), au moins une pompe à liquide (9) destinée à transporter un liquide (1) et au moins un réservoir de liquide (4), **caractérisée en ce que** l'au moins un réservoir à pression constante (A, B, C, D) est relié, du côté de la zone destinée à un liquide, à au moins un récipient de sécurité (E) qui est divisé par un piston de séparation mobile (11E) en deux zones, l'une des zones étant reliée à l'au moins un réservoir à pression constante (A, B, C, D) et à la pompe à liquide (9) et l'autre zone contenant un fluide tampon (5) et **en ce qu'**un capteur de pression est relié à cette zone du récipient de sécurité (E) et à la pompe à liquide (9) de manière à ce qu'une compression du fluide tampon (5) soit détectée par le capteur de pression et de manière à arrêter la pompe à liquide (9).

2. Procédé de fonctionnement d'une unité de réservoirs à pression constante qui comprend au moins un réservoir à pression constante (A, B, C, D) qui est divisé en deux zones par un piston de séparation coulissant (11A, 11B, 11C, 11D), au moins une pompe à liquide (9) destinée à transporter un liquide (1) et au moins un réservoir de liquide (4), **caractérisé en ce que** l'unité de réservoirs à pression constante comprend en outre un récipient de sécurité (E) qui est divisé en deux zones par un piston de séparation coulissant (11E), et des pics de pression du côté du liquide (1E) sont évités du fait qu'un fluide tampon (5) est comprimé dans l'autre zone du récipient de sécurité (E), que cette compression est détectée par un capteur de pression et que la pompe à liquide (9) est arrêtée.

3. Procédé selon la revendication 2, **caractérisé en ce qu'**un gaz, en particulier de l'azote, est utilisé comme fluide tampon (5).

4. Procédé selon la revendication 2 ou 3, **caractérisé en ce que** l'unité de réservoirs à pression constante est utilisée pour stocker de l'hydrogène.

5. Procédé selon l'une des revendications 2 à 4, **caractérisé en ce que** l'unité de réservoirs à pression constante utilise comme liquide des liquides hydrauliques difficilement inflammables qui contiennent de l'eau et du polyglycol, ou des liquides hydrauliques à base d'huile minérale.

6. Procédé selon la revendication 4, **caractérisé en ce que** l'hydrogène est stocké à une pression de 235 à 5000 bars, en particulier de 301 à 1200 bar et de préférence de 620, 850, 900 ou 1000 bars.
